(19) Europäisches Patentamt
European Patent Office
Office européen des brevets

(11) EP 2 477 769 B1

(12) FASCICULE DE BREVET EUROPEEN

(45) Date de publication et mention
de la délivrance du brevet:
**24.12.2014 Bulletin 2014/52**

(21) Numéro de dépôt: **10770556.8**

(22) Date de dépôt: **14.09.2010**

(51) Int Cl.:
**B22F 3/105** (2006.01)　　　**B29C 67/00** (2006.01)

(86) Numéro de dépôt international:
**PCT/FR2010/051906**

(87) Numéro de publication internationale:
**WO 2011/033215 (24.03.2011 Gazette 2011/12)**

(54) **PROCEDE DE REALISATION D'UN OBJET PAR TRAITEMENT LASER A PARTIR D'AU MOINS DEUX MATERIAUX PULVERULENTS DIFFERENTS ET INSTALLATION CORRESPONDANTE**

VERFAHREN ZUR HESTELLUNG VON OBJEKTEN MITTELS LASER AUS MINDESTENS ZWEI UNTERSCHIELDICHEN PULVERWERKSTOFFEN UND ENTSPRECHENDE HERSTELLUNGSANLAGE

METHOD OF PRODUCING AN OBJECT BY LASER FROM AT LEAST TWO DIFFERENT POWDER METARIALS AND CORRESPONDING MANUFACTURING DEVICE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **17.09.2009　FR 0956387**

(43) Date de publication de la demande:
**25.07.2012　Bulletin 2012/30**

(73) Titulaire: **Phenix Systems
63200 Riom (FR)**

(72) Inventeur: **TEULET, Patrick
F-63200 Riom (FR)**

(74) Mandataire: **Myon, Gérard Jean-Pierre et al
LAVOIX
62, rue de Bonnel
69448 Lyon Cedex 03 (FR)**

(56) Documents cités:
**WO-A1-87/07538　　　DE-A1-102007 033 715
DE-C1- 19 935 274　　　US-A- 5 876 550
US-A1- 2006 231 975**

## Description

La présente invention concerne un procédé de réalisation d'un objet par traitement laser à partir d'au moins deux matériaux pulvérulents différents, ainsi qu'une installation pour la mise en oeuvre de ce procédé. Par traitement laser, on entend un frittage ou une fusion.

Dans l'état actuel de la technique, on connaît des procédés utilisant le principe de génération de lits successifs de poudre, lesquels font appel à une raclette ou un rouleau. A cet effet, on se référera notamment à l'enseignement de FR-A-2 856 614. Cette solution connue consiste à prélever, à partir d'une zone de stockage, une quantité de matériau pulvérulent, puis à la diriger vers une zone d'étalement d'une fine couche de ce matériau.

Puis, on réalise un traitement laser, par frittage ou fusion, de ce matériau pulvérulent de façon à former une première couche. Il est ensuite possible de former une couche supplémentaire, s'étendant au-dessus de la première couche dont la fabrication a été décrite ci-dessus. En itérant ce processus, on fabrique un objet tridimensionnel formé de différentes couches, chaque couche étant une section dudit objet.

Cette solution connue présente cependant certains inconvénients. Ainsi, les trajectoires et les positions des particules ou grains du matériau pulvérulent, dans le plan de la première couche ainsi formée, ne peuvent être maîtrisées. En d'autres termes, seule l'épaisseur de cette couche est maîtrisée, mais pas sa répartition selon les deux autres directions de l'espace.

Ainsi, il se révèle impossible de fabriquer au moins une couche mince d'un matériau pulvérulent, présentant une géométrie prédéfinie, par exemple de type complexe, dans le plan de cette couche. Bien entendu, la présence au sein d'une même couche de plusieurs matériaux pulvérulents, ne peut pas non plus être envisagée de manière satisfaisante puisqu'il y aurait mélange partiel ou total de plusieurs matériaux dans la même couche.

Par ailleurs, on connaît une solution alternative, selon laquelle un matériau pulvérulent est projeté localement sur un support, notamment au moyen d'un pistolet. On conçoit que, dans ces conditions, il est envisageable de déposer plusieurs matériaux différents au sein d'une même couche, à savoir pour une même zone d'altitude. Cependant, les différentes zones de la couche, occupées par ces matériaux distincts, ne présentent pas une précision géométrique suffisante.

Finalement, des procédés de réalisation d'un objet par traitement laser à partir d'au moins deux matériaux pulvérulents différents sont connus de DE 10 2007 033715, DE 19935274 et US 5876550.

Ceci étant précisé, l'invention vise à permettre une plus grande intégration de fonctions au sein d'un seul et même objet en trois dimensions, lors de sa fabrication. En d'autres termes, l'invention vise à fabriquer, par un procédé de traitement au laser, un tel objet qui intègre au moins deux matériaux pulvérulents différents, au sein d'au moins une même couche.

A cet effet, elle a pour objet un procédé de réalisation d'un objet à partir d'au moins deux matériaux pulvérulents différents, comprenant les étapes suivantes :

- on ménage un premier passage de géométrie prédéfinie, dans un masque,
- on place le masque, de sorte que ce premier passage se trouve en regard d'un support,
- on dépose une pellicule d'un premier matériau sur le support, au travers du passage,
- on traite ce premier matériau ainsi déposé, par faisceau laser, de manière à former une première zone, constituée du premier matériau, appartenant à une première couche de cet objet,
- on ménage un second passage de géométrie prédéfinie dans le masque,
- on place le masque, de sorte que le second passage se trouve en regard du support,
- on dépose une pellicule d'un second matériau contre le support, au travers du second passage,
- on traite par faisceau laser ce second matériau, de façon à former une seconde zone, constituée du second matériau appartenant à ladite même première couche.

Selon d'autres caractéristiques :

- on utilise un masque formé d'un treillis métallique et d'un matériau de colmatage,
- on traite le masque au moyen d'un faisceau laser de façon à retirer localement une partie du matériau de colmatage, en vue de la formation du passage,
- on utilise un masque formé par une feuille enroulée autour de deux bobines,
- on dépose le matériau pulvérulent à la surface du masque, au voisinage du passage, et on force ce matériau pulvérulent au travers de ce passage, notamment par l'intermédiaire d'un rouleau et/ou d'une raclette,
- on calibre au moins la première zone, afin de régler l'épaisseur de cette zone,
- on forme au moins une troisième zone, constituée d'un troisième matériau, appartenant à la première couche,
- on forme au moins une seconde couche, s'étendant contre la première couche, incluant au moins deux zones différentes constituées de matériaux pulvérulents distincts,
- on commande l'étape de calibration d'au moins la première zone de la première couche, afin que toutes les zones de toutes les couches aient la même épaisseur, y compris la zone la plus épaisse de la première couche, mais exception faite de la ou des autres zones de cette première couche.

L'invention a également pour objet une installation pour la mise en oeuvre du procédé tel que défini ci-dessus, comprenant :

- un masque,
- des moyens de formation d'au moins un passage de géométrie prédéfinie, dans ce masque,
- des moyens d'alimentation en au moins un premier et un second matériaux pulvérulents,
- des moyens propres à déposer des pellicules de ce premier et de ce second matériaux sur un support, au travers du passage,
- un poste laser, propre à générer un faisceau laser en direction de chaque pellicule.

L'invention va être décrite ci-après, en référence aux dessins annexés, donnés uniquement à titre d'exemple non limitatif, dans lesquels :

- la figure 1 est une vue de côté, illustrant une installation permettant la mise en oeuvre d'un procédé conforme à l'invention ;
- la figure 2 est une vue de dessus, illustrant une feuille utilisée dans le cadre de ce procédé ;
- les figures 3 et 4 sont des vues respectivement de dessus et en coupe longitudinale, selon la ligne IV-IV, illustrant cette feuille après mise en oeuvre d'une première étape de ce procédé ;
- les figures 5 à 10 sont des vues de face, analogues à la figure 1, illustrant la mise en oeuvre de différentes étapes intervenant dans ce procédé ;
- les figures 11 à 13 sont des vues de face, à bien plus grande échelle, illustrant certaines des étapes des figures 5 à 10 ;
- les figures 14 et 15 sont des vues de face analogues aux figures 11 à 13, illustrant la mise en oeuvre d'une variante avantageuse de réalisation ;
- la figure 16 est une vue de face, illustrant la mise en oeuvre d'une autre variante de réalisation de l'invention.

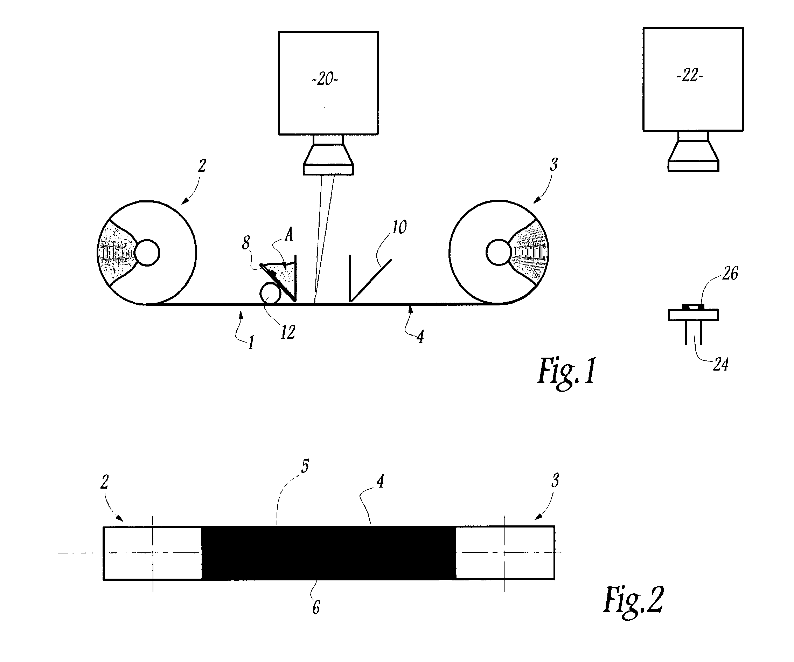

La figure 1 illustre une installation permettant la mise en oeuvre du procédé de fabrication, conforme à l'invention. Cette installation comprend tout d'abord une unité mobile 1, susceptible d'être déplacée selon une direction globalement horizontale, par tout moyen approprié non représenté. Cette unité comprend deux bobines 2 et 3, formées par l'enroulement d'une feuille définissant, dans la zone située entre les bobines, un masque 4.

Cette feuille comprend tout d'abord un treillis 5, ainsi qu'un matériau 6 de colmatage des ouvertures définies par ce treillis. Ce treillis 5, formant une grille, est à la fois résistant et souple. Ce treillis est constitué de fils, notamment de type métallique tissé, formant ainsi des mailles au travers desquelles pourra s'écouler le matériau pulvérulent à déposer, comme on le verra dans ce qui suit. A titre d'exemple non limitatif, la section des fils constitutifs du treillis peut être voisine de 40 micromètres.

De plus, la distance séparant deux fils adjacents peut être voisine de 106 micromètres.

A titre également non limitatif, on peut considérer qu'une valeur minimale, à la fois de section des fils et de distance entre deux fils adjacents, est voisine de 20 micromètres. En ce qui concerne la valeur maximale, on peut prévoir, à titre non limitatif, des fils d'une section de 0.6 mm, deux fils adjacents étant séparés par une distance de 1.5 mm. Les indications numériques ci-dessus, concernant à la fois les valeurs typiques, minimales et maximales, ne doivent bien évidemment pas être interprétées comme étant obligatoires au sens de l'invention.

Le matériau de colmatage 6, lequel occupe entièrement les différents orifices formés par le treillis, est de tout type approprié. En vue des besoins du procédé, il doit présenter une résistance inférieure à celle du matériau constitutif du treillis, notamment en termes de résistance thermique.

L'unité mobile 1 comprend en outre un poste d'alimentation 8 en un premier matériau pulvérulent, dénommé A, un poste d'aspiration 10 de ce matériau, ainsi qu'un rouleau 12. Ce dernier, qui est susceptible d'entrer en rotation autour de son axe, afin de se déplacer le long du masque, est destiné à étaler le matériau pulvérulent comme on le verra dans ce qui suit.

L'installation conforme à l'invention comprend en outre un premier poste laser 20, propre à diriger un faisceau laser en direction du masque 4. Ce premier poste 20 est de tout type connu, approprié pour cette fonction qui sera décrite plus en détail ci-après.

Il est par ailleurs prévu un second poste de laser 22, destiné au traitement du matériau pulvérulent comme on le verra dans ce qui suit. Ce poste 22 est propre à coopérer avec un piston 24, mobile selon la direction verticale. Un support 26, reposant sur le piston 24, est destiné à recevoir différents matériaux pulvérulents.

Dans une première phase du procédé conforme à l'invention, il s'agit de retirer localement une partie du matériau de colmatage, au sein de la feuille formant les deux bobines. Cette opération de retrait est réalisée à l'aide du faisceau laser F généré par le poste 20.

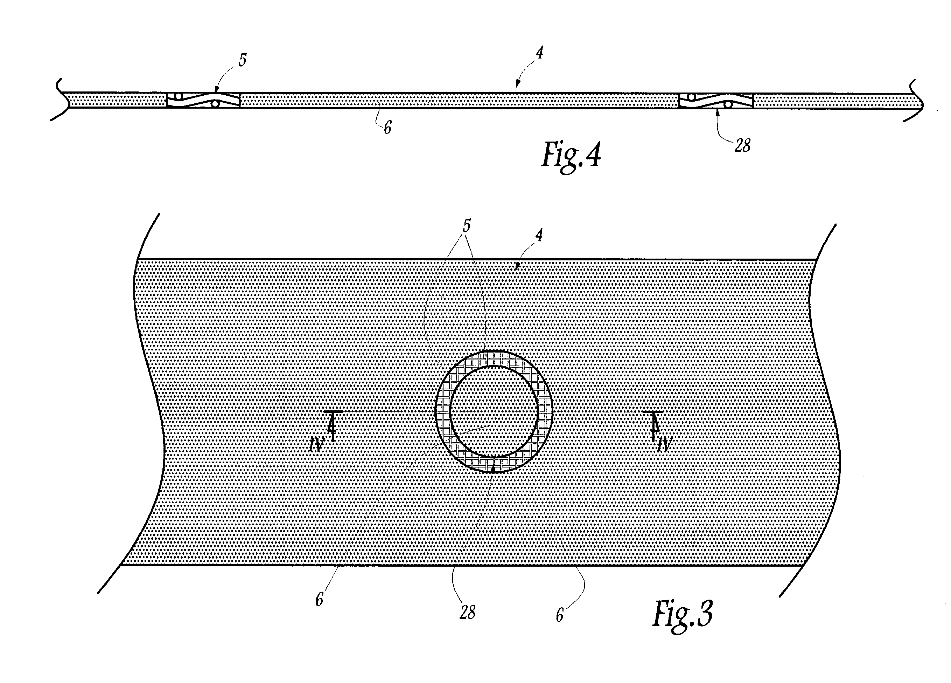

Dans l'exemple illustré, cette opération permet de former une ouverture 28, de forme annulaire, laquelle laisse apparaître les fils constitutifs du treillis 5 (figures 3 et 4, cette dernière étant à plus grande échelle). On conçoit par conséquent que le matériau pulvérulent est susceptible de passer au travers de cette ouverture 28, en étant cependant retenue par le matériau de colmatage adjacent.

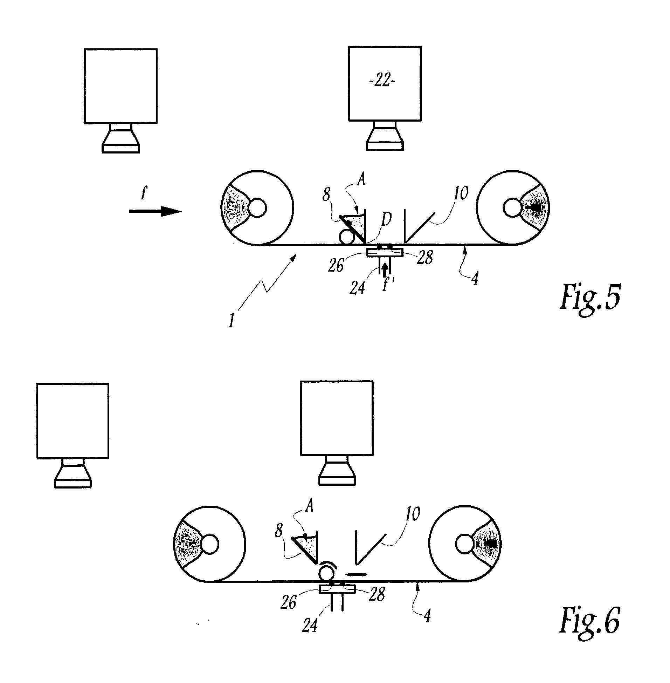

Puis, après formation de cette ouverture 28, on déplace l'unité mobile en direction du second poste laser 22 (flèche _f_ sur la figure 5). Afin d'éviter tout contact entre le support 26 et le masque 4, lors de son déplacement, on fait descendre le piston 24 selon une course appropriée.

Au terme de ce déplacement, l'ouverture annulaire 28 est positionnée, de sorte que son centre coïncide avec l'axe du piston, vertical sur les figures. On fait alors remonter le piston (flèche f'), afin de mettre en contact la face supérieure du support 26 avec la face inférieure du masque 4. On dépose alors une dose D du premier matériau pulvérulent A, via l'alimentation 8, laquelle dose se déverse sur la face supérieure du masque 4, à distance de l'ouverture 28.

Ensuite, on relève les postes d'alimentation et d'aspiration, puis on actionne le rouleau 12 (figure 6), afin qu'il se déplace le long de la zone du masque, située autour de l'ouverture 28. Par conséquent, ce rouleau se déplace également au droit de cette ouverture 28. A titre purement non limitatif, le mouvement de ce rouleau est par exemple conforme à l'enseignement du brevet français 2 856 614 au nom de la Demanderesse.

Au terme de cette dernière étape, ce rouleau a forcé la matière à pénétrer au travers de l'ouverture 28, via les mailles du treillis 5, en direction de la face supérieure du support 26. Ce mouvement de rouleau 12 est avantageusement un va-et-vient selon la direction horizontale. En d'autres termes, ce rouleau décrit un aller, puis un retour, à savoir qu'il réalise deux passages au-dessus de l'ouverture 28 avant de retrouver sa position originelle. A titre de variante, le rouleau peut décrire plusieurs allers-retours, avant de revenir dans cette position de départ. A titre de variante supplémentaire non représentée, en vue d'introduire le matériau pulvérulent au travers de l'ouverture 28, on peut également utiliser une raclette, en remplacement du rouleau 12, ou bien encore en combinaison avec celui-ci.

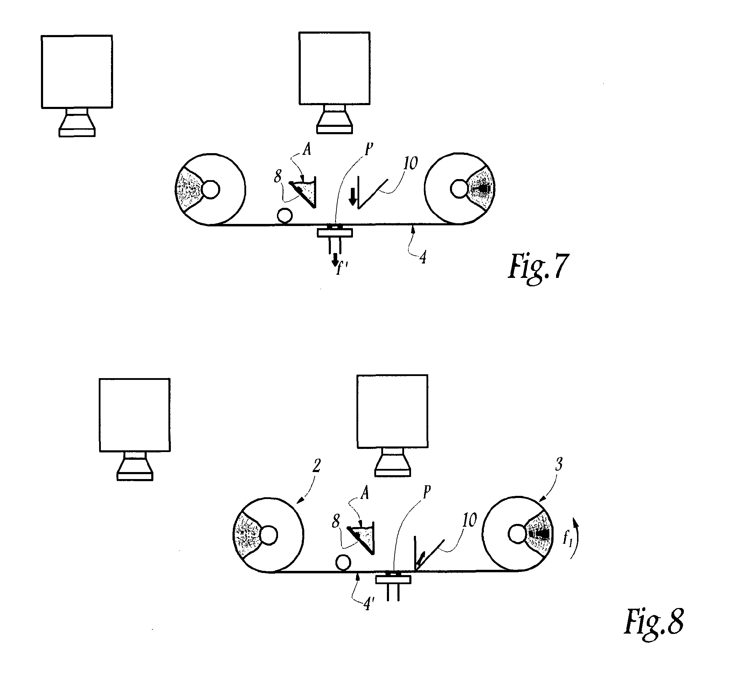

Après ce passage du rouleau, le support 26 est par conséquent recouvert d'une pellicule P du premier matériau pulvérulent, laquelle est disposée selon la forme géométrique voulue, en l'occurrence selon un anneau. Puis, on fait redescendre le piston selon une course appropriée (flèche f'' sur la figure 7), afin de placer cette pellicule à distance de la face inférieure du masque.

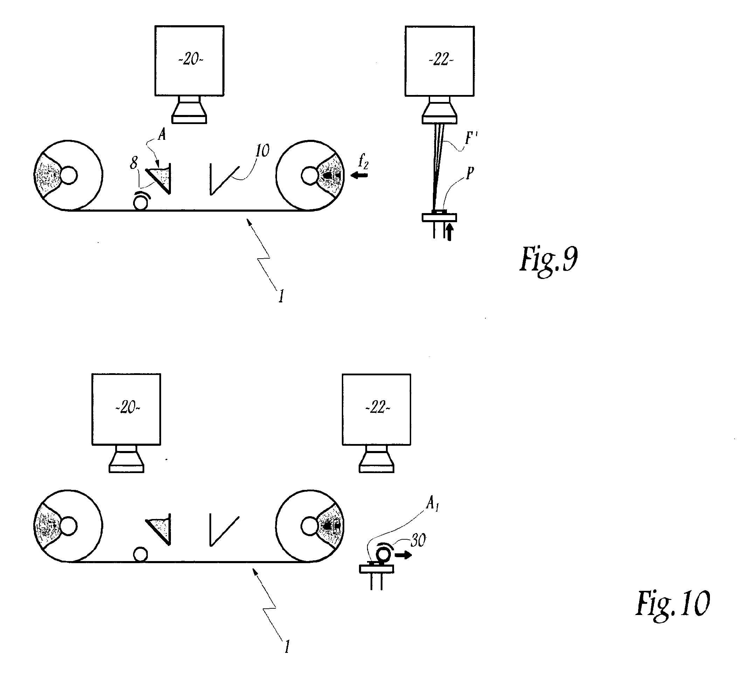

On relève alors le rouleau 12, puis on enroule la bobine 3, placée à droite sur les figures (flèche f1 sur la figure 8). Ceci induit par conséquent un déplacement de l'ensemble de la feuille vers la droite. Ce mouvement permet de placer un nouveau masque 4', à savoir une nouvelle portion de feuille vierge, entièrement colmatée, entre les deux bobines 2 et 3. De plus, ce déplacement de la feuille permet de diriger le trop-plein de poudre en direction du poste d'aspiration 10, en vue de sa récupération. Ensuite, on remonte le poste d'aspiration et on déplace l'unité mobile 1 vers sa position originelle, à savoir au droit du premier poste laser 20 (flèche f2 sur la figure 9).

Le support pourvu de la pellicule P de matériau pulvérulent se trouve alors en regard du poste de traitement laser 22, sans interposition du masque 4. Il est ensuite possible de générer un faisceau F', afin de procéder à un traitement laser, par fusion ou frittage, de façon connue en soi (figure 9). Cette action est avantageusement complétée par le passage d'un rouleau de calibration 30, de type connu en soi (figure 10). Ce dernier permet de calibrer, de façon précise, l'épaisseur de la zone du premier matériau traité par laser.

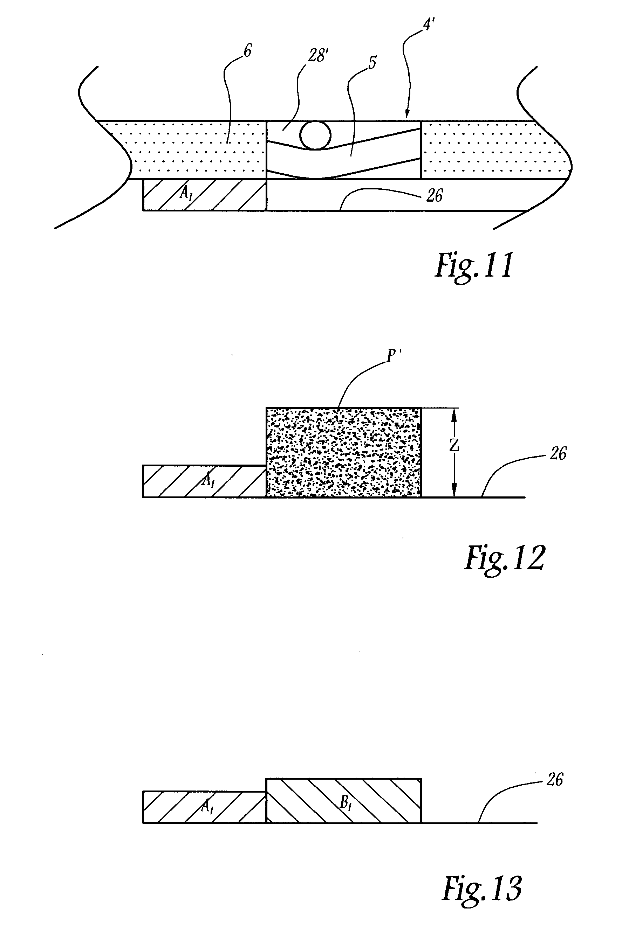

Au terme des opérations décrites ci-dessus, le support 26 est recouvert par une zone du premier matériau, laquelle appartient à une première couche de l'objet fabriqué conformément à l'invention. Cette zone, qui est affectée de la référence $A_I$, en référence au premier matériau A et à la première couche I, est visible à plus grande échelle aux figures 11 et suivantes.

Il est à noter que, de façon habituelle, le matériau pulvérulent utilisé dans le cadre du procédé conforme à l'invention peut être sujet à un phénomène de compaction lors de son traitement laser. En d'autres termes, l'épaisseur de la zone finale $A_1$ est inférieure à celle de la pellicule P de matériau pulvérulent, avant ce traitement laser. De façon typique, ce taux de compaction est voisin de 2, à savoir que l'épaisseur de la pellicule P est voisine du double de l'épaisseur de la zone finale $A_I$, formée du matériau pulvérulent traité laser.

Conformément à l'invention, il est alors possible de former, au sein de cette première couche I, une zone $B_I$ formée d'un matériau pulvérulent B, différent de celui A. Pour ce faire, on réitère les opérations présentées ci-dessus, à savoir :

- formation d'une autre découpe, de géométrie donnée dans le masque,
- déplacement de l'unité mobile en direction du poste laser 22, en même temps que descente du support et de la zone $A_I$,
- dépôt d'une quantité appropriée du second matériau. A cet effet, on peut changer l'ensemble du poste d'alimentation ou, à titre d'alternative, utiliser le même poste dans lequel on aura déversé le matériau B ;
- passage du rouleau, de manière à forcer le passage du second matériau au travers de la seconde découpe,
- retrait de l'unité mobile,
- traitement laser de façon à former une seconde zone $B_I$, constituée du second matériau au sein de la première couche, puis calibration.

Il est ensuite possible, le cas échéant, de réaliser d'autres zones en d'autres matériaux, au sein de cette même première couche I. On note $C_I$ une éventuelle zone réalisée en un troisième matériau, dans cette première couche et, par itération, $N_I$ une zone réalisée en un nième matériau au sein de cette même première couche.

Une fois que cette première couche a été réalisée, à partir des différentes zones formées de matériaux distincts, il est possible de former au moins une couche supplémentaire, au dessus de cette première couche. A cet effet, cette seconde couche peut être formée de plusieurs zones, constituées par tout ou partie des matériaux pulvérulents utilisés pour la constitution de la première couche. Il est également à noter que cette seconde couche peut intégrer des matériaux supplémentaires, qui n'ont pas été utilisés pour la première couche. A titre d'exemple, on note $A_{II}$, $B_{II}$, $C_{II}$ et par itération $N_{II}$, les différentes zones de cette seconde couche II, formée des premier, second, troisième, jusqu'à nième matériaux pulvérulents.

En répétant les opérations ci-dessus, la mise en oeuvre de l'invention conduit à la réalisation d'un objet tridimensionnel, formé d'un certain nombre, dénommé M, de couches successives. De plus, comme cela ressort de ce qui précède, chacune de ces couches peut être formée de différents matériaux pulvérulents, le nombre et la nature de ces matériaux pouvant varier d'une couche à l'autre. Afin de fixer les idées, si M est la dernière couche, à savoir la couche libre opposée à la couche I, on note $A_M$, $B_M$, ..., $N_M$ les différentes zones de cette couche M, formées par les premier, second, ..., nième matériaux pulvérulents. L'invention permet, par conséquent, de réaliser un objet tridimensionnel, incluant au moins deux matériaux distincts dans une même couche.

On rappellera que les matériaux pulvérulents se caractérisent et se distinguent par leur composition chimique et/ou leur répartition granulométrique et/ou leur granularité. En effet, au minimum un seul de ces critères suffit pour rendre unique un matériau pulvérulent.

Par conséquent, l'invention autorise une plus grande intégration de fonctions au sein d'un seul et même objet tridimensionnel, lors de sa fabrication. De telles fonctions peuvent notamment être la conductivité thermique, la conduction ou l'isolation électrique, l'amélioration des coefficients de frottement ou de glissement, la tenue à la température, la tenue à la corrosion, la dureté de surface, l'augmentation des caractéristiques réfractaires, l'amélioration de l'état de surface ou du point de vue des conditions de fabrication, la précision, la productivité, la réduction des contraintes résiduelles internes ... De plus, on notera que l'invention permet de conférer une géométrie parfaitement définie aux différentes zones d'une même couche, réalisées en des matériaux pulvérulents distincts.

Lors de la formation de la zone $B_I$, la face inférieure du masque 4' prend appui contre la face supérieure de la zone $A_I$ (voir figure 11), et non pas directement sur le support 26. Dans ces conditions, la pellicule P' (voir figure 12) de ce second matériau, qui recouvre le support après passage au travers de l'ouverture 28', présente une épaisseur supérieure à celle de la pellicule P du premier matériau, dont le dépôt a été décrit ci-dessus. Ainsi, après compaction du matériau B lors du traitement laser, l'épaisseur de cette zone $B_I$, est supérieure à celle de la zone $A_I$, ce qui crée un décalage entre leurs faces libres (figure 13).

On conçoit également que, si une deuxième couche de ces deux matériaux doit être déposée, ce décalage va se traduire également au niveau des zones de cette seconde couche. Il en va de même si plus de deux matériaux doivent être déposés au sein d'une même couche.

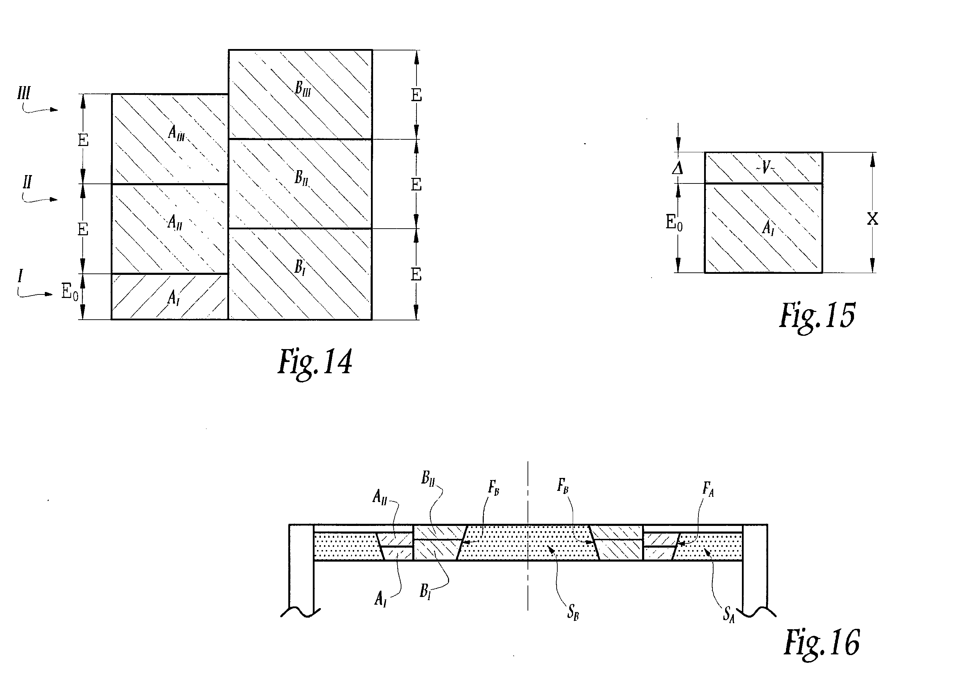

Or, selon une caractéristique avantageuse de l'invention, toutes les zones présentent la même épaisseur, y compris la dernière zone de la première couche, mais exception faite de la première ou des premières zones de cette première couche. En d'autres termes, si l'on utilise deux matériaux (figure 14), toutes les zones $A_{II}$, $A_{III}$, $B_I$, $B_{II}$ et $B_{III}$ ont alors la même épaisseur E, y compris la seconde zone $B_I$ de la première couche I, à savoir la plus épaisse, mais en revanche pas la première zone $A_I$ de la première couche, à savoir celle déposée en premier. Sur cette figure 14, les deuxième et troisième couches sont désignées par II et III. De façon plus générale, dans le cas de N zones par couche, toutes les zones présentent la même épaisseur, exception faite des (N-1) premières zones de la première couche, mais y compris la zone la plus épaisse de cette première couche.

L'épaisseur de chaque zone est directement fonction de l'épaisseur de la plus haute zone déposée au préalable, de la hauteur du masque, ainsi que du taux de compaction. Dans le cas de deux matériaux, on note E l'épaisseur que l'on souhaite donner à chaque zone de chaque couche, exception faite de la zone de la première couche déposée en premier.

La pellicule du premier matériau de la première couche est déposée directement sur le support, avec une épaisseur correspondant sensiblement à celle du masque. Puis, après traitement laser, le matériau pulvérulent traité présente une épaisseur notée X (voir figure 15). Cependant, il s'agit d'une phase intermédiaire de la fabrication, puisqu'on soumet ce matériau traité à l'étape de calibration, qui permet de réduire sa hauteur, afin de former la couche définitive $A_I$ d'épaisseur $E_0$. On conçoit que

$$E_0 = X - \triangle,$$

où $\triangle$ correspond à l'épaisseur du volume V de matériau traité laser, volume enlevé lors de l'étape de calibration.

Il est avantageux de commander cette étape de calibration, afin que cette valeur Eo corresponde à une fraction prédéterminée de l'épaisseur souhaitée E, définie ci-dessus. L'obtention de zones de même épaisseur E est permise, en calibrant la première zone, de sorte que son épaisseur $E_0$ est égale à la moitié de l'épaisseur souhaitée E.

De façon similaire, dans le cas où on dépose un nombre N de zones supérieur à 2, au sein d'une même couche, on commande le calibrage de la première zone $A_I$, de sorte que son épaisseur $E_0$ soit égale à E/N. Après calibration, la zone $B_I$ du second matériau présente une épaisseur double de celle $E_0$, alors que le troisième matériau présente une épaisseur égale au triple de $E_0$. Ainsi, pour J variant de 1 à N, l'épaisseur de la zone $J_I$ du Jème matériau est égale à (J* $E_0$).

L'homme du métier pourra adapter les valeurs de calibration décrites ci-dessus, en fonction des variations des paramètres du procédé, tels que décrits ci-dessus. Cette calibration sera différente, notamment en cas de variation du taux de compaction de ces matériaux.

Ainsi, en référence aux figures 12 et 13, la hauteur de la zone $B_I$ est égale à ½ de celle, notée Z sur la figure 12, de la pellicule P'. En effet, le taux de compaction est de 2. De façon plus générale, pour un taux de T, cette hauteur est égale à $Z*(1/T)$.

La figure 16 illustre une autre variante de réalisation avantageuse de l'invention. Sur cette figure, on retrouve deux matériaux pulvérulents A et B, formant sur deux couches successives des zones notées $A_I$, $B_I$, $A_{II}$ et $B_{II}$. On notera que ces zones présentent des faces en contre-dépouille notées $F_A$ et $F_B$.

De façon avantageuse, on dépose du matériau pulvérulent, non seulement à l'endroit destiné à former les zones précitées, mais également au voisinage de ces dernières. Ceci permet de constituer des supports de matériau pulvérulent, dénommés $S_A$ et $S_B$, à proximité des sections traitées laser.

L'invention n'est pas limitée aux exemples décrits et représentés.

Ainsi, dans l'exemple, le masque est formé au moyen d'un premier faisceau laser. Cependant, à titre de variante, on peut prévoir de préformer chaque ouverture 28 ou 28'. Ainsi, au moment de la réalisation de la feuille, on peut recouvrir le treillis au moyen d'un masque d'épargne, de sorte que le matériau de colmatage ne recouvre pas l'intégralité de ce treillis, afin de former des ouvertures de géométrie voulue.

## Revendications

1. Procédé de réalisation d'un objet à partir d'au moins deux matériaux pulvérulents différents (A, B), comprenant les étapes suivantes :

   - on ménage un premier passage (28) de géométrie prédéfinie, dans un masque (4),
   - on place le masque, de sorte que ce premier passage se trouve en regard d'un support (26),
   - on dépose une pellicule (P) d'un premier matériau (A) sur le support, au travers du passage,
   - on traite ce premier matériau ainsi déposé, par faisceau laser (F'), de manière à former une première zone ($A_I$), constituée du premier matériau, appartenant à une première couche (I) de cet objet,
   - on ménage un second passage (28') de géométrie prédéfinie dans le masque (4),
   - on place le masque, de sorte que le second passage se trouve en regard du support,
   - on dépose une pellicule (P') d'un second matériau (B) contre le support, au travers du second passage,
   - on traite par faisceau laser ce second matériau, de façon à former une seconde zone ($B_I$) constituée du second matériau, appartenant à ladite même première couche (I).

2. Procédé selon la revendication précédente, caractérisé en qu'on utilise un masque (4) formé d'un treillis métallique (5) et d'un matériau de colmatage (6).

3. Procédé selon la revendication précédente, caractérisé en qu'on traite le masque (4) au moyen d'un faisceau laser (F) de façon à retirer localement une partie du matériau de colmatage (6), en vue de la formation du passage (28).

4. Procédé selon l'une des revendications précédentes caractérisé en qu'on utilise un masque formé par une feuille enroulée autour de deux bobines (2, 3).

5. Procédé selon l'une des revendications précédentes, caractérisé en qu'on dépose le matériau pulvérulent à la surface du masque, au voisinage du passage (28), et on force ce matériau pulvérulent au travers de ce passage, notamment par l'intermédiaire d'un rouleau (12) et/ou d'une raclette.

6. Procédé selon l'une des revendications précédentes, caractérisé en qu'on calibre au moins la première zone ($A_I$), afin de régler l'épaisseur de cette zone.

7. Procédé selon l'une des revendications précédentes, caractérisé en qu'on forme au moins une troisième zone ($C_I$), constituée d'un troisième matériau (C), appartenant à la première couche.

8. Procédé selon l'une des revendications précédentes, caractérisé en qu'on forme au moins une seconde couche (II), s'étendant contre la première couche (I), incluant au moins deux zones différentes ($A_{II}$, $B_{II}$) constituées de matériaux pulvérulents distincts.

9. Procédé selon l'une des revendications précédentes, caractérisé en qu'on commande l'étape de calibration d'au moins la première zone ($A_I$) de la première couche (I), afin que toutes les zones de toutes les couches aient la même épaisseur, y compris la zone ($B_I$) la plus épaisse de la première couche (I), mais exception faite de la ou des autres zones ($A_I$) de cette première couche.

10. Installation pour la mise en oeuvre d'un procédé conforme à l'une quelconque des revendications précédentes, comprenant :

    - un masque (4),
    - des moyens (20) de formation d'au moins un passage (28, 28') de géométrie prédéfinie, dans ce masque,
    - des moyens (8) d'alimentation en au moins un premier et un second matériaux pulvérulents (A, B),
- des moyens (12) propres à déposer des pellicules (P, P') de ce premier et de ce second matériaux sur un support, au travers du passage,
- un poste laser (22), propre à générer un faisceau laser en direction de chaque pellicule.

**Patentansprüche**

1. Verfahren zur Herstellung eines Objekts aus mindestens zwei unterschiedlichen pulverförmigen Materialien (A, B), die folgenden Schritte umfassend:

   - in eine Maske (4) wird ein erster Durchgang (28) mit vorgegebener Geometrie eingearbeitet,
   - die Maske wird so angeordnet, dass der erste Durchgang sich gegenüber eines Trägers (26) befindet,
   - eine dünne Schicht (P) eines ersten Materials (A) wird auf dem Träger über den Durchgang abgelagert,
   - dieses so angelagerte erste Material wird mit einem Laserbündel (F') behandelt, derart, dass eine erste Zone ($A_I$), bestehend aus dem ersten Material, zu einer ersten Schicht (I) dieses Objekts gehört,
   - in die Maske (4) wird ein zweiter Durchgang (28') mit vorgegebener Geometrie eingearbeitet,
   - die Maske wird so platziert, dass der zweite Durchgang sich gegenüber dem Träger befindet,
   - gegen den Träger wird eine dünne Schicht (P') eines zweiten Materials (B) über den zweiten Durchgang abgelagert,
   - dieses zweite Material wird mit dem Laserbündel derart behandelt, dass eine zweite, aus dem zweiten Material bestehend Zone ($B_I$) gebildet wird, die zu derselben ersten Schicht (I) gehört.

2. Verfahren nach dem vorhergehenden Anspruch, **dadurch gekennzeichnet, dass** eine Maske, die aus einem Metallgeflecht (5) und einem Abdichtmaterial (6) gebildet ist, verwendet wird.

3. Verfahren nach dem vorhergehenden Anspruch, **dadurch gekennzeichnet, dass** die Maske (4) mittels des Laserbündels (F) derart behandelt wird, dass lokal ein Teil des Abdichtmaterials (6) in Hinblick auf die Bildung des Durchgangs (28) entfernt wird.

4. Verfahren nach einem der vorhergehenden Ansprüche, **dadurch gekennzeichnet, dass** eine Maske verwendet wird, die aus einer um zwei Spulen (2, 3) gewickelte Folie gebildet wird.

5. Verfahren nach einem der vorhergehenden Ansprüche, **dadurch gekennzeichnet, dass** das Pulvermaterial auf die Fläche der Maske in der Nähe des Durchgangs (28) aufgebracht wird und dieses Pulvermaterial durch diesen Durchgang gezwungen wird, insbesondere mittels einer Rolle (12) und/oder einer Rakel.

6. Verfahren nach einem der vorhergehenden Ansprüche, **dadurch gekennzeichnet, dass** mindestens die erste Zone ($A_I$) auf Maß gebracht wird, um die Dicke dieser Zone einzustellen.

7. Verfahren nach einem der vorhergehenden Ansprüche, **dadurch gekennzeichnet, dass** mindestens eine dritte Zone ($C_I$), die aus einem dritten Material (C) besteht und zu der ersten Schicht gehört, gebildet wird.

8. Verfahren nach einem der vorhergehenden Ansprüche, **dadurch gekennzeichnet, dass** mindestens eine zweite Schicht (II) gebildet wird, die sich an der ersten Schicht (I) erstreckt und mindestens zwei unterschiedliche Zonen ($A_{II}$, $B_{II}$) einschließt, die aus unterschiedlichen Pulvermaterialien gebildet werden.

9. Verfahren nach einem der vorhergehenden Ansprüche, **dadurch gekennzeichnet, dass** der Schritt des Einstellens des Maßes mindestens der ersten Zone ($A_I$) der ersten Schicht (I) so gesteuert wird, dass alle Zonen aller Schichten dieselbe Dicke haben, einschließlich der dicksten Zone ($B_I$) der ersten Schicht (I), aber eine Ausnahme der Zone oder der anderen Zonen ($A_I$) dieser ersten Schicht gemacht wird.

10. Anlage für die Durchführung eines Verfahrens nach einem beliebigen der vorhergehenden Ansprüche, umfassend:

    - eine Maske (4),
    - Mittel (20) zur Bildung mindestens eines Durchgangs (28, 28') von vorgegebener Geometrie in dieser Maske,
    - Mittel (8) zum Zuführen von mindestens einem ersten und einem zweiten Pulvermaterial (A, B),
    - Mittel (12), die geeignet sind, dünne Schichten (P, P') dieses ersten und dieses zweiten Materials auf einem Träger über den Durchgang abzulagern,
    - eine Laserstation (22), die geeignet ist, ein Laserbündel in Richtung jeder dünnen Schicht zu erzeugen.

## Claims

1. Method for creating an object from at least two different powder materials (A, B), comprising the following steps:

   - a first passage (28) having a predefined geometry is provided in a mask (4),
   - the mask is placed in such a way that said first passage is located facing a mounting (26),
   - a film (P) made of a first material (A) is deposited on the mounting, via the passage,
   - said first material deposited in this way is treated, with a laser beam (F'), so as to form a first area (A$_I$), consisting of the first material, and belonging to a first layer (I) of said object,
   - a second passage (28') having a predefined geometry is provided in the mask (4),
   - the mask is placed in such a way that said second passage is located facing the mounting,
   - a film (P') of a second material (B) is deposited against the mounting, through the second passage,
   - said second material is treated with a laser beam, so as to form a second area (B$_I$), consisting of the second material, and belonging to said same first layer (I).

2. Method according to the above claim, **characterised in that** a mask (4) consisting of a metal mesh (5) and a blinding material (6) are used.

3. Method according to the above claim, **characterised in that** the mask (4) is treated by means of a laser beam (F) so as to locally remove a part of the blinding material (6), with a view to forming the passage (28).

4. Method according to any of the above claims, **characterised in that** a mask formed by a sheet wound around two spools (2, 3) is used.

5. Method according to any of the above claims, **characterised in that** the powder material is deposited on the surface of the mask, in the vicinity of the passage (28), and said powder material is pushed through said passage, particularly by means of a roller (12) and/or a scraper.

6. Method according to any of the above claims, **characterised in that** at least the first area (A$_I$) is calibrated, so as to adjust the thickness of said area.

7. Method according to any of the above claims, **characterised in that** a third area (C$_I$), consisting of a third material (C), and belonging to a first layer, is formed.

8. Method according to any of the above claims, **characterised in that** at least a second layer (II) is formed, extending against the first layer (I), including at least two different areas (A$_{II}$, B$_{II}$) consisting of separate powder materials.

9. Method according to any of the above claims, **characterised in that** the step for calibrating at least the first area (A$_I$) of the first layer (I) is actuated, so that all the areas of all the layers have the same thickness, including the thickest area (B$_I$) of the first layer (I), but excluding the other area(s) (A$_I$) of said first layer.

10. Facility for the implementation of such a method as defined above, comprising:

    - a mask (4),
    - means (20) for forming at least one passage (28, 28') having a defined geometry, in said mask,
    - means (8) for feeding with at least one first and one second powder materials (A, B),
    - means (12) suitable for depositing films (P, P') of said first and said second materials on a mounting, through the passage,
    - a laser station (22), suitable for generating a laser beam in the direction of each film.

EP 2 477 769 B1

*Fig.1*

*Fig.2*

Fig.4

Fig.3

Fig.5

Fig.6

Fig.7

Fig.8

Fig.9

Fig.10

*Fig.11*

*Fig.12*

*Fig.13*

Fig.15

Fig.16

Fig.14

# EP 2 477 769 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2856614 A
- DE 102007033715
- DE 19935274
- US 5876550 A
- FR 2856614